# EUROPEAN PATENT APPLICATION

(11) **EP 4 697 279 A1**
(43) Date of publication of application: **18.02.2026**
(21) Application number: 24306356.7
(22) Date of filing: 13.08.2024
(51) Int. Cl.: G06T 17/00, H04N 21/81

(54) **AVATAR BALDNESS AREA SIGNALING**

(71) Applicant: InterDigital CE Patent Holdings, SAS, 75017 Paris (FR)
(72) Inventor: LE CLERC, Francois, 35590 L'HERMITAGE (FR); GOSSELIN, Philippe Henri, 35235 THORIGNE-FOUILLARD (FR); COVA REGATEIRO, João Pedro, 35220 CHATEAUBOURG (FR); AVRIL, Quentin, 35830 BETTON (FR)
(74) Representative: Vossius & Partner Patentanwälte Rechtsanwälte mbB

(57) **Abstract**

Methods and apparatus are provided for signaling baldness information of an avatar in a three-dimensional virtual environment. In one embodiment, information corresponding to a hairstyle of an avatar is encoded in a bitstream. The information comprises a description of baldness areas in the hairstyle indicative of a collection of spherical volumes inside which strand roots are forbidden. In another embodiment, a bitstream is parsed for information corresponding to a hairstyle of an avatar that has been encoded in a bitstream. The information is decoded and used to reconstruct an avatar comprising a hairstyle with baldness areas using the baldness information.

## Description

### BACKGROUND

The present application is related to representation of avatars in three-dimensional (3D) virtual environments. Such representations are used, for instance, in "Metaverse" frameworks, where avatars acts as proxy representations for users, allowing users to interact with other users represented by their own avatar and with real world elements through virtual representations of these elements.

### BRIEF SUMMARY

At least one of the present embodiments generally relates to a method or an apparatus for representation of avatars in 3D virtual environments.

According to a first aspect, there is provided a method. The method comprises steps for determining information corresponding to a hairstyle of an avatar, wherein said information comprises a description of baldness areas in the hairstyle indicative of a collection of spherical volumes inside which strand roots are forbidden; and, encoding said description of baldness information into a bitstream.

According to a second aspect, there is provided another method. The method comprises steps for parsing a bitstream comprising baldness information corresponding to a hairstyle of an avatar; decoding said baldness information; and, reconstructing the avatar comprising a hairstyle with baldness areas using said baldness information

According to another aspect, there is provided an apparatus. The apparatus comprises a processor and a memory. The processor can be configured to operate according to the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
Figure 1 is a block diagram illustrating an example system according to one or more embodiments of the present disclosure.
Figure 2 is a block diagram illustrating an example video encoder according to one or more embodiments of the present disclosure.
Figure 3 is a block diagram illustrating an example video decoder according to one or more embodiments of the present disclosure.
Figure 4 illustrates topologies of reference avatar mesh models for MPEG-I Scene Description standard.
Figure 5 illustrates strand-based hairstyle model geometry attached to an avatar head mesh.
Figure 6 illustrates a top view of a guide curve representation of a hairstyle with a bald area in its center.
Figure 7 illustrates bald area signaling for strand-based hairstyle models according to one described embodiment.
Figure 8 illustrates parsing of the "guideCurveHairstyle" property.
Figure 9 illustrates a processing model for synthesizing full strand hairstyle models from guide curves while preserving bald areas according to one described embodiment.
Figure 10 illustrates one embodiment of an encoding method under the described aspects.
Figure 11 illustrates one embodiment of a decoding method under the described aspects.
Figure 12 illustrates one embodiment of an apparatus under the described aspects.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

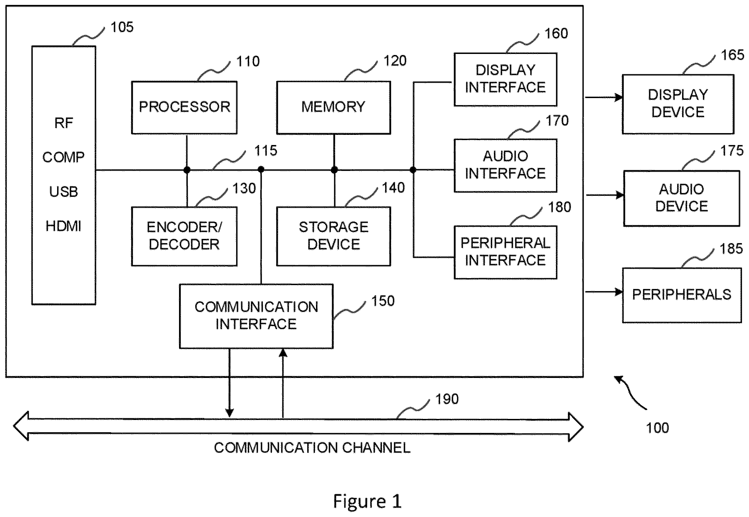

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

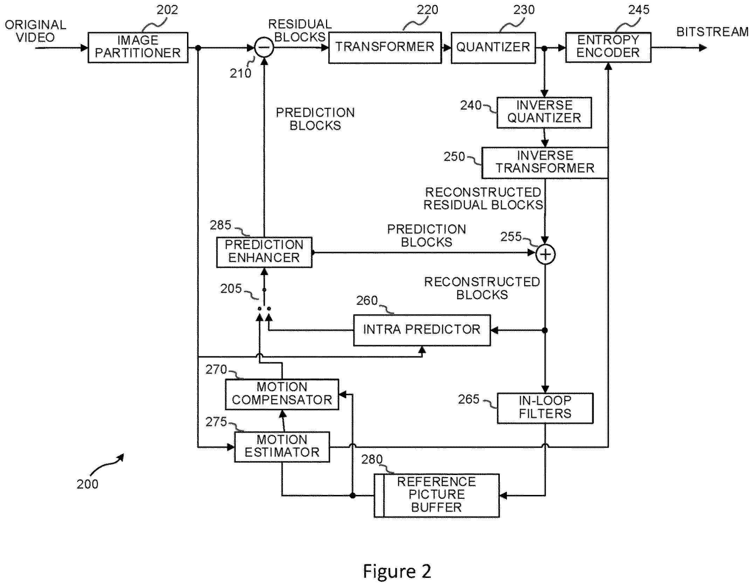

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

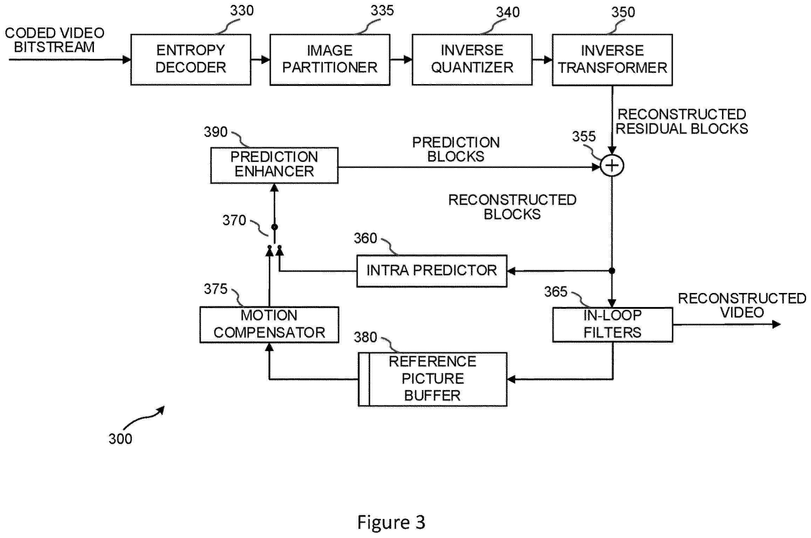

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, *U* and V (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to Figure 2. The post-decoding processor can use metadata derived by the pre-encoding processor and/or signaled in the video bitstream.

### Avatars

The domain of the described embodiments is the representation of avatars in 3D virtual environments. Such representations are used, for instance, in "Metaverse" frameworks, where avatars act as proxy representations for users. They allow users to interact with other users represented by their own avatar and with real world elements through virtual representations of these elements.

The scenario described hereafter describes, for illustration purposes, an application involving an avatar in a Metaverse framework. An e-commerce Website may be represented inside a Metaverse 3D virtual environment by a virtual shop in a virtual shopping street. An avatar can be directed by the user it represents, for instance by means of a game console or by pressing keys on a computer keyboard, to walk along the virtual shopping street in the virtual environment and enter the virtual shop. The virtual shop is a computer-generated representation of a store owned by some retail company. The display on the user's computer screen is updated live to reflect the position and viewpoint of the avatar in the virtual environment. When the avatar enters the virtual shop, the user is shown the virtual representation of the shop. S/he can navigate his or her avatar through the aisles of the virtual shop and select goods that s/he wants to buy. These goods are virtual representations of real goods that are sold in brick-and-mortar shops owned by the retail company. When the avatar exits the virtual shop, its user is asked to pay for the goods it has selected in the virtual shop. The payment proceeds in the real world, for instance by means of the user's credit card. When the payment is acknowledged, the user gets the physical goods delivered to his or her home by the retail company. In this scenario, navigating in the 3D immersive environment through an avatar to buy goods can be seen as a novel immersive alternative to browsing an e-commerce website.

### Avatar representation

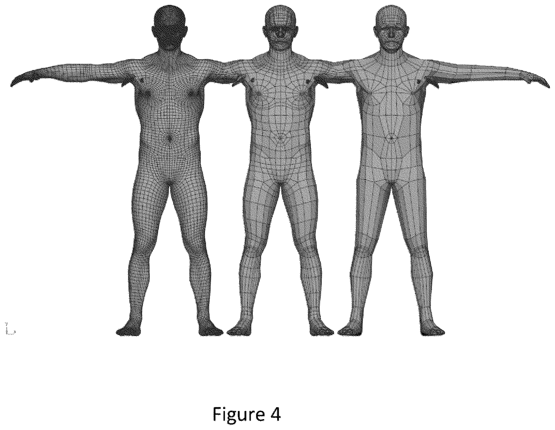

An avatar in a 3D virtual environment is often represented as a 3D textured mesh. Example avatar mesh geometries are shown in Figure 4, showing various levels of detail from left to right. The mesh is defined by a set of 3D vertices connected by edges. The vertices and edges form polygonal faces that together make up the surface of the mesh. Often, the polygonal faces are triangles.

The polygonal faces of the mesh define a geometrical model of the human character it represents. The count of vertices on the mesh and their locations on the human body, with respect to semantic salient points such as mouth corners or elbow tips, defines the topology of the mesh. In other words, the topology defines how the surface of the mesh is sampled. For instance, a mesh topology for an avatar may impose that the contours of its lips be sampled using a fixed number of vertices positioned at regularly spaced intervals along the contour, with vertices located at the lip corners.

For a given topology, the positions in 3D space of the mesh vertices define the shape of the mesh, which reflects the morphology of the character. To illustrate the difference between topology and morphology, consider several meshes of approximately the same scale and size representing the bodies of several characters. We assume that all these meshes share the same topology. This topology may impose that all of these meshes have two vertices positioned at the two corners of the lips. However, the relative 3D positions of these two vertices may differ across characters to reflect morphological differences in the widths of their mouths.

### Hair models

The body of a human character has a smooth surface that can be well modelled by a polygonal mesh. However, meshes are not appropriate for modeling hair, which consists of a set of thin intertwined strands that do not form a smooth surface. At best, a mesh geometry can be used to model the outer surface of hair and the associated texture to represent the strands, but this is acceptable only for low-fidelity character rendering.

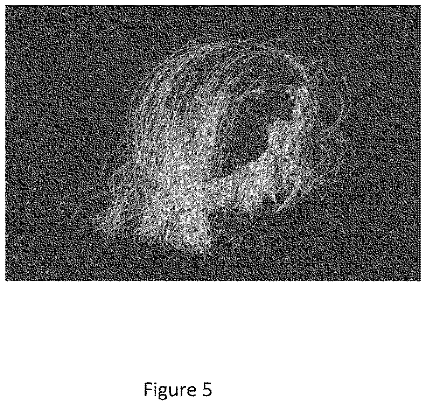

For more realism, the geometry of the avatar hair can be modelled as a collection of 3D curves anchored on the head mesh, where each curve represents an individual strand. To limit the volume of data, the model may be limited to a smaller set of strands called "guide curves". Guide curves often represent the geometry of the wisps making up the hairstyle. They may represent the geometry of a reference strand in the wisp after which the other strands of the wisp are modelled. Such a guide curve model is illustrated on Figure 5. For clarity, only guide curves of the hairstyle model are displayed in Figure 5. It is up to the renderer in this case to reconstruct a full strand model from the guide curves, by interpolating on the surface of the avatar mesh all the strand curves in-between guide curves for all the wisps. In this process, the shape of the interpolated strand curves is conditioned by the nearest guide curves.

### Avatar and hairstyle descriptions in the MPEG-1 Scene Description standard

Version 2.0 of the glTF standard, described in the document "Khronos glTF specification for the efficient transmission and loading of 3D scenes and models by engines and applications" provides specifications for standardizing the representation of the basic geometry, texture and animation of an avatar.

The MPEG-I Scene Description (SD) standard, currently described in the draft text of ISO/IEC 23090-14, enriches glTF with extra features, including timed media. Amendment 2 of MPEG-I SD, described in ISO/IEC 23090-14 CDAM 2 document: "Support for Haptics, Augmented Reality, Avatars, Interactivity, MPEG-I Audio, and Lighting", defines a specialization of a glTF node for avatars through its "MPEG_node_avatar" extension. This extension adds avatar-specific semantic descriptive elements to the attributes provided by glTF for describing the geometry, texture and animation of digital human characters.

Amendment 2 of the MPEG-I SD standard does not standardize any descriptor for the hairstyle of an avatar. However, the strand-based hairstyle models presented in the preceding section may be described using the glTF mesh object as a collection of polyline primitives, each polyline representing a strand or a guide curve. A polyline primitive of a glTF mesh is described as an ordered list of control vertices, to which attributes may be attached. These attributes may describe the 3D positions of the control vertices, their colors, or their 2D coordinates in a UV texture map.

The control vertices of these polylines may be used by extension to represent control points of parametric curves such as Béziers, splines or NURBS curves. When this is the case, the position of a given point on a curve is expressed as a linear combination of the positions of at least two control vertices describing the curve within a mesh primitive, with given linear combination weights. Similarly, the value of an attribute, for instance a normal vector for the "NORMAL" attribute or a UV coordinate for the " TEXCOORD_n" attribute, of said given point on a curve is expressed as the linear combination of the attribute values of the said at least two control vertices, with the same said given linear combination weights.

In Metaverse-like frameworks described in an earlier section, the descriptions of 3D environments, possibly involving avatars, need to be transmitted between client and server devices. For instance, in multi-user applications, a server device may manage the description of a virtual 3D environment and of avatars navigating in this environment under the control of their users. In this setting, each user device periodically sends an update of its avatar position, posture and appearance to the server device. The server device updates the description of the scene representing the 3D virtual environment accordingly to reflect the new positions and postures of all avatars. It then transmits this description to all user devices so that they can render the updated scene to the users.

In this context, for bandwidth saving purposes it is desirable to reduce the volume of the data needed to represent the virtual world elements. A full hairstyle model is generally bulky as it may consist of 100,000 3D curves or more. In contrast, the guide curve representation of a hairstyle is much more lightweight as it typically reduces to a few hundred curves. However, the compacity of the guide curve model comes at the price of the extra computation needed to reconstruct the full strand model at the receiver end, which involves synthesizing strands based on the shapes and colors of the nearest guide curves.

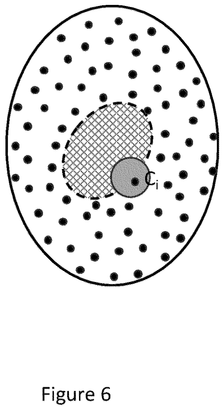

This reconstruction process may create issues when the hairstyle contains bald areas, as illustrated in Figure 6, which represents a simplified top view of the guide curve representation of a hairstyle. The hairstyle is anchored on the scalp region of a 3D model of an avatar. The outer solid line in Figure 6 is the contour of the top view projection of the scalp region. Each dot inside the contour marks the top view projection of the root point of a guide curve. Bald areas are regions of the scalp over which no strand grows. Hence, it does not contain any strand root. However, strands growing from roots outside of a bald area may cover a bald region. The hashed area in the center of the hairstyle region in Figure 6 represents the projection of a bald area of the hairstyle.

When this guide curve representation is transmitted to a receiver, the receiving device needs to reconstruct a full strand model from the guide curves. To this end, it interpolates strand curves in-between guide curves. The shape of an interpolated strand curve is computed using some algorithm as a function of the shapes of the nearest guide curves. The greyed area in Figure 6 represents the support region of the strands that may be interpolated by such an algorithm in the neighborhood of the guide curve whose root location is *Cᵢ*.

The absence of guide curves in some areas of the scalp may indicate the presence of a bald spot, but it may also be the result of sparse sampling of guide curves in this area. Thus, guide curves do not provide reliable and accurate information on the presence and localization of bald spots in the hairstyle. Without explicit signaling of the bald spots, the process of reconstructing the full hairstyle from the guide curves may grow strands in bald spots on the scalp. This situation is illustrated in Figure 6. The grey area represents a region where strands are grown in the neighborhood of the guide curve whose root location is *Cᵢ*. This area extends well inside the bald spot. As a result, the bald spot will not be preserved in the full reconstructed hairstyle.

A first prior paper discloses a method for generating realistic artificial strand-based hairstyle models using a hierarchy of generative neural networks.

The hairstyle models presented in this paper rely on the projection of the surface of the scalp to a 2D planar "UV map" region, following a well-known process in computer graphics referred to as UV mapping. Each 3D location on the surface of the scalp is bijectively mapped to a location in the UV map, parameterized by U and V coordinates. The paper leverages this property to signal baldness areas using a binary baldness map in UV space. The baldness map is a binary image in UV space where each pixel has two possible values, one value indicating that the 3D location corresponding to the pixel on the scalp belongs to a bald region and the other value indicating that strands may grow from this location. Each pixel in the baldness map has a unique corresponding location on the scalp.

The generation of hairstyle in the paper is performed by several neural networks. The training of these neural networks relies on an optimization criterion or loss that drives the computation of the network parameters. In the training stage, a term in this loss discourages strands to be grown from areas signaled by the baldness map.

The binary baldness map used in the paper is an effective solution for signaling bald areas in the hairstyle models. However, it requires the construction of a UV mapping between the surface of the scalp in 3D space and a 2D map. The description of hairstyle models based on guide curves in glTF relies on mesh object, as presented in the aforementioned section discussing the MPEG-I scene description standard, relies on polyline primitives and may not provide such a UV mapping. Building this mapping incurs extra processing and increases bandwidth requirements for transmitting the bald area map when the hairstyle model is transmitted, since both the UV mapping and the binary texture map must be transmitted.

The described embodiments propose an effective and economical solution for signaling baldness areas in hairstyle models described by a set of guide curves. Unlike the method disclosed in the aforementioned paper described, the proposed solution does not require the computation and transmission of a UV map and a baldness texture image in addition to the polyline representations of the guide curves.

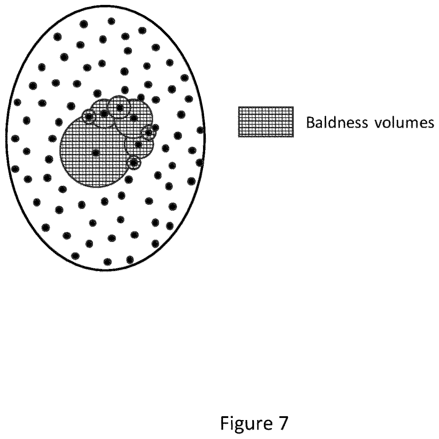

One aspect of the described embodiments is to enrich the description of the hairstyle as guide curves by a set of baldness volumes inside which no strand is allowed to grow when reconstructing the full hairstyle from the guide curves. In one embodiment, these baldness volumes are defined as spheres centered on "bald root points". The locations of these points and the radii of their corresponding spheres are added to the description of the hairstyle model. Note that the bandwidth needed to transmit the baldness volume is very small, since a baldness volume is specified by the 3 coordinates of its center and the scalar radius of its bounding sphere. The union of all baldness volumes defines a region of 3D space where no strand is allowed to grow. These baldness volumes are represented using cross-hatched areas, as shown for example in Figure 7, which shows a schematic top view of a hairstyle similar to Figure 6.

In short, the described embodiments provide an explicit signaling of bald spots on the scalp that ensures their preservation in the full hairstyle that is reconstructed from the guide curves. Note that the described embodiments do not restrict baldness volumes to areas surrounded by hair, as depicted in Figure 7. Baldness volumes may also be used to mark areas located at the outer border of the hairstyle in order to delimit the hair region.

### Proposed description of guide curve-based hairstyle models

The following detailed presentation of the hairstyle representation that is the object of the described embodiments is compliant with the MPEG-I Scene Description format, but its meaning and use is generic. The proposed representation could be encoded in any other scene description format, such as XML or USD.

A hairstyle model relying on guide curves is described according to the described embodiments by a "guideCurveHairstyle" object. The properties of this object are listed in Table 1 and are described below.

The hairstyle may be given a name that can be specified using the "name" property of "guideCurveHairstyle".

The "guideCurves" property is the index in the "meshes" array of the scene description of a glTF mesh object whose primitives describe the geometry and optionally the photometry of the guide curves making up the hairstyle model. The "mode" attribute of each of the primitives must be set to "LINE_STRIP" to indicate they are represented as polylines. Each primitive must have a "POS ITION" attribute that specifies the 3D coordinates of each of its control vertices. Optionally, other attributes of the primitives may specify colors, normal vectors or tangent vectors associated with the control vertices.

The described embodiments may specify bald regions of the hairstyle on the scalp of an avatar through optional additional "bald root points" and their associated bounding volumes, as described in the previous section, for example. In one embodiment of the aspects described, the bounding volume associated with a root point is a sphere centered on this point. In Figure 7, which represents the top view of a hairstyle, the bounding volumes are represented as a cross-hatched disk and the bald root points at dots at the center of each disk. The other dots outside of the bounding volumes represent the root points of the guide curves making up the hairstyle model.

**Table 1: description of the "guideCurveHairstyle" object properties.**

| **Name** | **Type** | **Require d** | **Description** |
|---|---|---|---|
| name | string | No | Name of the hairstyle. |
| guideCurves | integer | Yes | Index in the "meshes" array of the mesh whose primitives define the guide curves of the hairstyle model. Each primitive must have a POSITION attribute, its mode must be set to LINE_STRIP. |
| baldnessVolume s | integer | No | Index in the "meshes" array of the mesh whose single POINTS primitive specifies bald root points and their bounding volumes. This primitive must have a POSITION attribute specifying the positions of the bald root points and a RADIUS attribute specifying the radii of their bounding spheres. |

The bald root points and their associated bounding volumes are described by the "baldnessVolumes" property of "guideCurveHairstyle". This property may be omitted if the hairstyle does not feature any baldness area. The set of bald root points forms a point cloud that is specified as a glTF mesh object whose topology type, specified by its "mode" attribute, is set to "POINTS". Each bald root point is a primitive of this mesh. It must have a "POS ITION" attribute that defines its 3D position and a "RADIUS" attribute that specifies the radius of the sphere defining its bounding volume. The value of the new "RADIUS" attribute is an accessor whose type is "SCALAR" and component type is float. Note that "RADIUS" is a new attribute of a mesh primitive that is not defined in version 2 of the glTF specification.

### Alternative embodiments

In other embodiments, the baldness volumes associated to bald root points are specified using 3D geometrical primitives other than a sphere. The attributes of the primitives of the glTF mesh referenced by the "baldnessVolumes" property must then be modified accordingly.

In an embodiment, baldness volumes may for instance be specified as rectangular cuboids centered on the bald root points. In this case, each bounding volume may be specified by three VEC3 descriptors. Each of these three descriptors may be specified as an attribute of the primitives of the glTF mesh referenced by "baldnessVolumes". The first VEC3 descriptor defines the length, width and height of the rectangular cuboid. It may be encoded in a "SIZE" attribute. The second VEC3 descriptor defines the direction vector of the length axis of the rectangular cuboid. It may be encoded in a "LENGTH_DIR" attribute. The third VEC3 descriptor defines the direction vector of the width axis of the rectangular cuboid. It may be encoded in a "WIDTH_DIR" attribute. The direction vector of the height axis of the rectangular cuboid for each bald root point may then be computed as the cross product of the "LENGTH_DIR" and "WIDTH_DIR" attribute values for this point.

In another embodiment, baldness volumes may be specified as ellipsoids centered on the bald root points. In this case, each baldness volume may be specified by three VEC3 descriptors. Each of these three descriptors may be specified as an attribute of the primitives of the glTF mesh referenced by "baldnessVolumes". The first VEC3 descriptor defines the lengths of the three principal axes of the ellipsoid. It may be encoded in a "SIZE" attribute. The second VEC3 descriptor defines the direction vector of the length axis of the ellipsoid. It may be encoded in a "LENGTH_DIR" attribute. The third VEC3 descriptor defines the direction vector of the width axis of the ellipsoid. It may be encoded in a "WIDTH_DIR" attribute. The direction vector of the height axis of the ellipsoid for each bald root point may then be computed as the cross product of the "LENGTH_DIR" and "WIDTH_DIR" attribute values for this point.

In another embodiment, the descriptors of the bounding volumes of the bald root points are specified as an additional property of "guideCurveHairstyle" instead of attributes of the "baldnessVolumes" mesh. For instance, if the bounding volumes of the bald root points are ellipsoids, this property may be named "ellipsoids" and consist of an array of *9N* floating-point numbers representing the concatenation of the three above-mentioned VEC3 ellipsoid descriptors for each of the *N* bald root points. Similarly, a property named "cuboids" consisting of 9N floating-point numbers may be used to represent the concatenation of the three above-mentioned VEC3 rectangular cuboid descriptors for each of the N bounding volumes of the bald root points. In yet another embodiment, these "ellipsoids" and "cuboids" descriptors may be encoded as integers representing the index in the "accessors" array of the scene description of an accessor referencing a bufferView and a buffer containing the 9N floating-point numbers defining the descriptors.

### Example MPEG-I SD description

The example scene description in MPEG-I SD format below describes the properties of a hairstyle represented using guide curves, according to the described embodiments.

The described scene contains a single root node named "my_avatar" that represents the model of an avatar. Accordingly, the node is extended by the "MPEG_node_avatar" extension. The avatar node includes a "mesh", named "my_avatar_mesh" and referenced by index 2 in the "meshes" array. The "MPEG_node_avatar" extension includes a hairstyle model consisting of guide curves, represented by the "hairstyle" property which, according to the described embodiments, is a "guideCurveHairstyle" object. The hairstyle is named "my_avatar_hairstyle".

The guide curves of the hairstyle model are described by the "guideCurves" property of the "guideCurveHairstyle", which refers to the mesh indexed by 0 in the "meshes" array and named "my_hairstyle_guide_curves". For conciseness, the model of the hairstyle is limited to 3 guide curves that are described by the 3 primitives of the mesh. Each primitive is a line strip whose "mode" property is accordingly set to 3. The geometries of the control vertices of these line strip primitives are described by the " POSITION" attributes of the primitives and their colors by the "COLOR_0" attributes.

The hairstyle model described by "guideCurveHairstyle" includes one or more baldness spots that are specified by its "baldnessVolumes" property. This property refers to the second mesh in the "meshes" array, indexed by 1, and named
"my_hairstyle_baldness_volumes". This mesh is a point cloud whose "mode" property is accordingly set to 0. The positions of its points are specified in its " POSITION" attribute and the radii of the spheres centered on the points are specified in its "RADIUS" attribute. When the full hairstyle is reconstructed from the guide curves, no strand is allowed to grow from root points located in these spheres.

| |
|---|
| ```
 {
    "scene": 0,
    "scenes": [
       {
         "nodes": [0]
       } ],
``` |

| |
|---|
| ```
    "meshes": [
       {
         "name": "my_hairstyle_guide_curves",
         "primitives": [
            {
               "attributes":
                  {
                    "POSITION": 0,
                    "COLOR_0": 1
                  },
               "mode": 3
            },
            {
               "attributes":
                  {
                    "POSITION": 2,
                    "COLOR_0": 3
                  },
               "mode": 3
            },
            {
               "attributes":
                  {
                    "POSITION": 4,
                    "COLOR_0": 5
                  },
               "mode": 3
            }
       ] },
       {
         "name": "my_hairstyle_baldness_volumes",
         "primitives": [
``` |

| |
|---|
| ```
            {
               "attributes":
                  {
                    "POSITION": 6,
                    "RADIUS": 7
                  },
               "mode": 0
            }
       ] },
       {
         "name": "my_avatar_mesh",
         "primitives": [
            {
               "attributes":
                  {
                    "POSITION": 8,
                    "TEXCOORD_0": 9
               "indices": 10,
               "mode": 4
            }
         ] } ],
    "nodes": [
       {
         "name": "my_avatar",
         "mesh": 2,
         "extensions": {
            "MPEG_node_avatar": {
                "mappings": [],
``` |

| |
|---|
| ```
               "type": "urn:my_avatar_type",
               "hairstyle": {
                  "name": "my_avatar_hairstyle",
                  "guideCurves": 0,
                  "radii": [0.07, 0.15, 0.11],
                  "baldnessVolumes": 1
            }
         }
       } ],
    "extensionsUsed": [
         "MPEG_node_avatar" ],
    "extensionsRequired": [
         "MPEG_node_avatar"
    ],
    "asset": {
         "version": ["2.0"]
    }
 }
``` |

### Parsing of the "guideCurveHairstyle" property

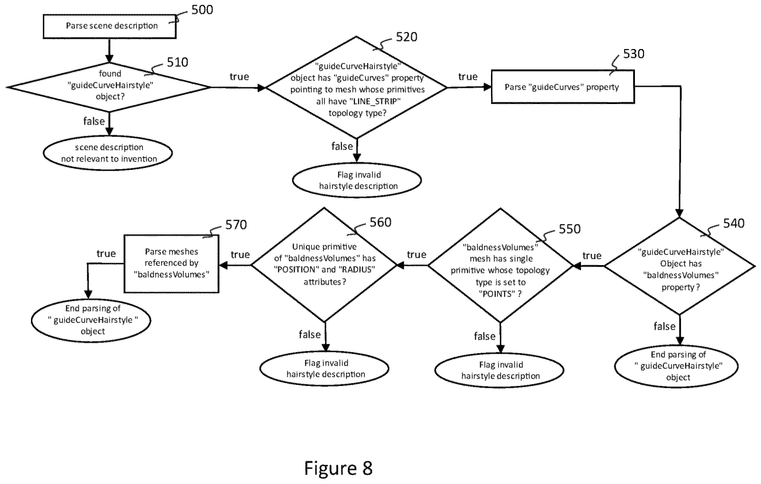

Parsing a scene description containing a "guideCurveHairstyle" property according to the described embodiments proceeds as described on the block diagram of Figure 8.

First, in step 500, the scene description is parsed.

At step 510, occurrences of "guideCurveHairstyle" objects are detected in the scene description. If no such object is found, the scene description is not relevant to the described embodiments.

The parsing proceeds to step 520, where it is checked whether the "guideCurveHairstyle" object has a "guideCurves" property and if this property points to a mesh and if the primitives of this mesh all have their mode property set to 3, which corresponds to the "LINE_STRIP" topology type. If at least one of these checks does not pass, the description of the "guideCurveHairstyle" object is flagged as invalid.

Else, at step 530 the "guideCurves" property of the "guideCurveHairstyle" object is parsed.

The parsing proceeds to step 540, where it is checked whether the "guideCurveHairstyle" object has a "baldnessVolumes" property. If not, parsing ends.

Else, the parsing proceeds to step 550, where it is checked whether the "baldnessVolumes" property detected at step 540 has a single primitive whose "mode" property is et to 0, corresponding to the "POINTS" topology type. If it is not the case, the description of the "guideCurveHairstyle" object is flagged as invalid.

The parsing then proceeds to step 560, where it is checked whether the only primitive of the "baldnessVolumes" property detected at step 550 has a "POSITION" and a "RADIUS" attribute. If it is not the case, the description of the "guideCurveHairstyle" object is flagged as invalid.

Else, at step 570 the meshes referenced by the "baldnessVolumes" property detected at step 540 is parsed, following which the parsing ends.

### Processing Model

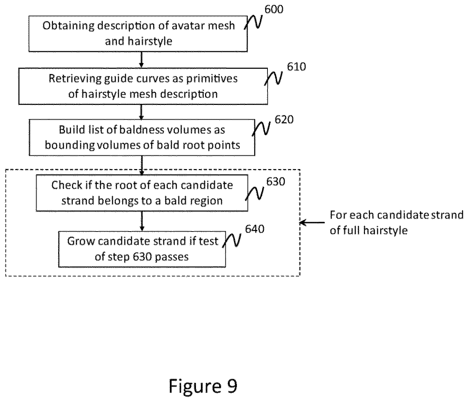

The processing model presented in this section is illustrated on the block diagram of Figure 9. It shows how the signaling of bald spots on a hairstyle described by guide curves, according to the described embodiments, can be exploited by an application to preserve these bald spots in the reconstruction of the full strand hairstyle from the guide curves.

The processing starts at step 600, where the device in charge of reconstructing a full hairstyle of strands receives the hairstyle description. This description, according to the described embodiments, consists of a set of guide curves and a set of baldness regions, represented in the main embodiment of the described embodiments by spheres centered on bald root points.

At step 610, the receiving device parses the hairstyle description to obtain the geometry, and optionally the photometry, of the guide curves of the hairstyle model.

At step 620, the receiving device further parses the hairstyle description to obtain the baldness volumes as bald root points and their associated bounding volumes, defined as spheres centered on the bald root points in the main embodiment of the described embodiments. It builds a list of these baldness volumes.

At step 630, the receiving device proceeds to reconstruct the full hairstyle from the outputs of steps 610 and 620. The reconstruction process involves growing strands from locations of the scalp region of the mesh of an avatar. For each candidate strand to be grown, the receiving device determines whether the root of the strand on the scalp belongs to one of the baldness volumes obtained at step 620.

Finally at step 640, each candidate strand of step 630 is grown from the scalp region of the avatar mesh if and only if the test of step 630 passes. Thus, candidate strands whose roots are inside one of the baldness volumes obtained at step 620 are not grown. This ensures a faithful preservation of the baldness spots in the reconstructed hairstyle.

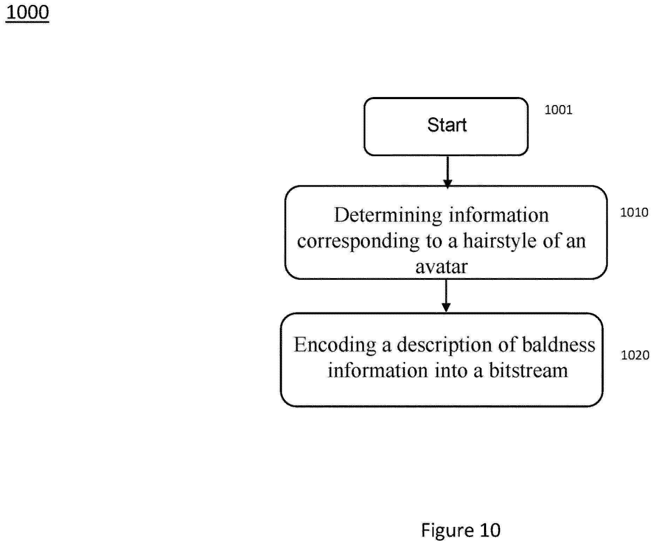

One embodiment of a method 1000 under the general aspects described here is shown in Figure 10. The method commences at start block 1001 and control proceeds from block 1001 to block 1010 for determining information corresponding to a hairstyle of an avatar, wherein said information comprises a description of baldness areas in the hairstyle indicative of a collection of spherical volumes inside which strand roots are forbidden. Control proceeds from block 1010 to block 1020 for encoding said description of baldness information into a bitstream.

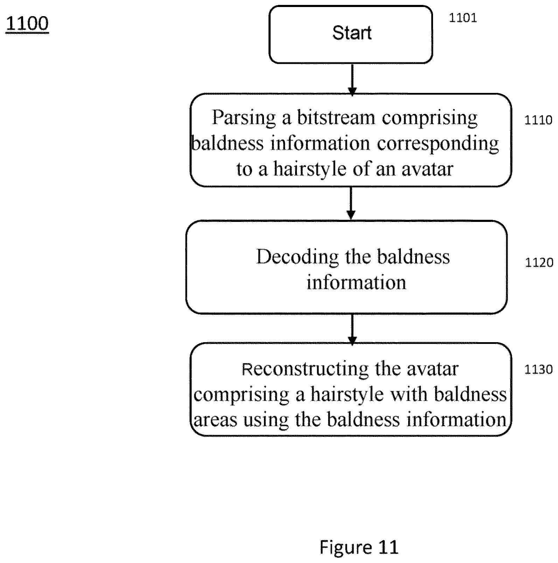

One embodiment of a method 1100 under the general aspects described here is shown in Figure 11. The method commences at start block 1101 and control proceeds to block 1110 for parsing a bitstream comprising baldness information corresponding to a hairstyle of an avatar. Control proceeds from block 1110 to block 1120 for decoding said baldness information. Control proceeds from block 1120 to block 1130 for reconstructing the avatar comprising a hairstyle with baldness areas using said baldness information.

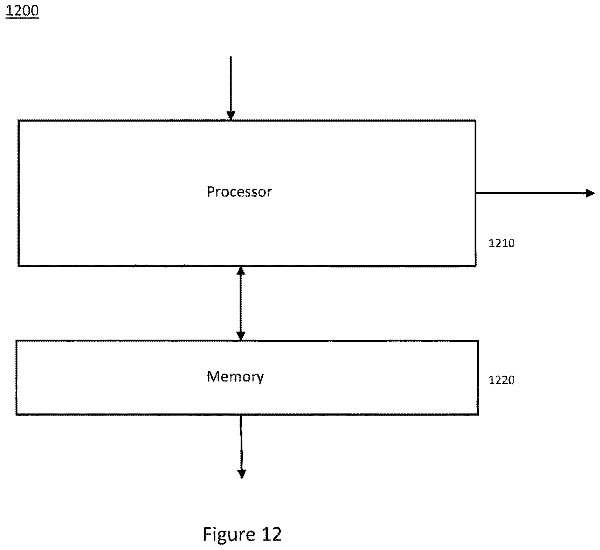

Figure 12 shows one embodiment of an apparatus 1200 for encoding, decoding, compressing, or decompressing, or filtering of video data using the aforementioned methods. The apparatus comprises Processor 1210 and can be interconnected to a memory 1220 through at least one port. Both Processor 1210 and memory 1220 can also have one or more additional interconnections to external connections.

Processor 1210 is also configured to either insert or receive information in a bitstream and, either compressing, encoding, or decoding using any of the described aspects.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to Figures 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method, comprising:
determining information corresponding to a hairstyle of an avatar, wherein said information comprises a description of baldness areas in the hairstyle indicative of a collection of spherical volumes inside which strand roots are forbidden; and,
encoding said description of baldness information into a bitstream.

2. An apparatus, comprising:
a memory and a processor configured to perform:
determining information corresponding to a hairstyle of an avatar, wherein said information comprises a description of baldness areas in the hairstyle indicative of a collection of spherical volumes inside which strand roots are forbidden; and,
encoding said description of baldness information into a bitstream.

3. A method, comprising:
parsing a bitstream comprising baldness information corresponding to a hairstyle of an avatar;
decoding said baldness information; and,
reconstructing the avatar comprising a hairstyle with baldness areas using said baldness information.

4. An apparatus, comprising:
a memory and a processor configured to perform:
parsing a bitstream comprising baldness information corresponding to a hairstyle of an avatar;
decoding said baldness information; and,
reconstructing the avatar comprising a hairstyle with baldness areas using said baldness information.

5. The method of Claim 3, or the apparatus of Claim 4, further comprising:
obtaining a description of the avatar mesh from the bitstream;
retrieving guide curves as primitives of hairstyle mesh descriptions;
building a list of baldness volumes as bounding volumes of bald root points; and,
growing at least one candidate strand if a corresponding root of a candidate strand belongs to a bald region.

6. The method of any one of Claims 1 or 3, or the apparatus of any one of Claims 2 or 4, wherein said baldness information comprises a name of a hairstyle, an index to a mesh defining guide curves of the hairstyle, and an index specifying bald root points and their bounding volumes.

7. The method of any one of Claims 1 or 3, or the apparatus of any one of Claims 2 or 4, wherein baldness volumes associated to bald root points are specified using 3D geometrical primitives other than a sphere.

8. A device comprising:
an apparatus according to Claim 2; and
at least one of (i) an antenna configured to receive a signal, the signal including a video block, (ii) a band limiter configured to limit the received signal to a band of frequencies that includes the video block, and (iii) a display configured to display an output representative of the video block.

9. A non-transitory computer readable medium containing data content generated according to the method of any one of claims 1, 3, or 5 through 7, or by the apparatus of any one of claims 2, 4, or 5 through 7, for playback using a processor.

10. A signal comprising video data generated according to the method of any one of claims 1, or 3, or 5 through 7, or by the apparatus of any one of claims 2, or 4, or 5 through 7, for playback using a processor.

11. A computer program product comprising instructions which, when the program is executed by a computer, cause the computer to carry out the method of any one of claims 1, or 3 or 5 through 7.
